# EUROPEAN PATENT APPLICATION

(11) **EP 2 708 850 A1**
(43) Date of publication of application: **19.03.2014**
(21) Application number: 12306109.5
(22) Date of filing: 14.09.2012
(51) Int. Cl.: G01C 21/34

(54) **Method and system for performing travel assistance for a user**

(71) Applicant: Alcatel Lucent, 75007 Paris (FR)
(72) Inventor: Raehmer, Silke, 75428 Illingen (DE); Kopp, Dieter, 75428 Illingen (DE)
(74) Representative: MERH-IP Matias Erny Reichl Hoffmann

(57) **Abstract**

A method and a system for performing travel assistance for a user are proposed, the method comprising providing travel route data indicative of a travel route of the user, receiving, while the user travels along the travel route on a current travel route segment, information indicative of a position of the user; estimating or determining, while the user travels along the travel route on the current travel route segment, an estimated/determined arrival time at a travel route segment start location of a next travel route segment of the travel route, on the basis of the received signal and the provided travel route data; determining one or more alternative travel route segments, if the estimated or determined arrival time at the travel route segment start location of the next travel route segment is later than a travel route segment start time of the next travel route segment; and providing updated travel route data indicative of the determined one or more alternative travel route segments.

## Description

The present document relates to a method and system for performing travel assistance for a user when the user is travelling on a travel route from a travel route start location to a travel route destination location.

### BACKGOUND

In the prior art, it is known to provide travel assistance for a user with regard to one or more travel route segments of the travel route with respect to means of transportation used on one or more travel route segments of the travel route.

For example, based on travel route data indicative of a travel route of the user, the travel route data including data being indicative of a travel route start location, a travel route start time at the travel route start location, a travel route destination location, and a travel route arrival time at the travel route destination location, as may be input by the user upon trip planning and travel booking e.g. via internet trip planning and booking services, it possible for users to schedule and book in advance parts of a travel itinerary for the travel route including scheduling and booking one or more means of transportation such as flights, train transfers, bus transfers, rental cars etc. for segments of the travel route or one or more travel services such as hotel accommodation at intermediate locations along the travel route and/or at the travel route destination.

However, it is desirable to provide more complemented travel assistance for the user, in particular providing travel assistance even along the travel route involving a pre-arranged travel itinerary, which includes transfer via plural means of transportation and/or additional travel services, while the user is travelling on the travel route.

### SUMMARY

In view of the above, it is desired to provide a method and system for a more complemented travel assistance for the user in comparison to the prior art. In particular, it is desired to provide travel assistance even along the travel route involving a travel itinerary, which includes transfer via plural means of transportation and/or additional travel services, while the user is already travelling on the travel route.

In the following, there are proposed a method for performing travel assistance for a user according to claim 1 and a system for performing travel assistance for a user according to claim 12.

According to a first aspect, there is proposed a method for performing travel assistance for a user, which comprises a step of providing travel route data indicative of a travel route of the user, in particular providing the travel route data at a server, server system and/or cloud system which may be communicably connected to a mobile device if the user so that the user can access travel route data via the mobile device by communicating with the server, server system and/or cloud system.

The travel route data may in some embodiments preferably include data being indicative of a travel route start location, a travel route start time at the travel route start location, a travel route destination location, and/or a travel route arrival time at the travel route destination location, as may be input by the user or provided by a service provider for trip planning and/or booking.

Furthermore, the provided travel route data may in some embodiments preferably include data being indicative of a sequence of a plurality of subsequent travel route segments of the travel route, each of the travel route segments in the data being associated with one means of transportation (modes of transport) to be used for travelling on the respective travel route segment (means of transportation such as, e.g., bus transfer, train transfer, taxi transfer, car transfer by private car or rental car, flights, boat/ferry/ship transfer etc.) or one travel service (e.g. hotel accommodation at the destination or for intermediate stopovers).

Each travel route segment in the data may be defined by a respective travel route segment start location, a respective travel route segment start time, and a respective travel route segment end location, as may be provided by a service provider for trip planning and/or booking and/or generated on the basis of travel itinerary data provided from one or more service provider for trip planning and/or booking. The data may further indicate a travel route segment end time for each travel route segment.

According to the first aspect, the method for performing travel assistance for a user further comprises a step of receiving information indicative of a position of the user while the user travels along the travel route on a current travel route segment. Here, the information indicative of a position of the user may directly indicate a position of the user, e.g. by position detection performed by a mobile device carried by the user, e.g. by a mobile device having positioning capabilities using satellite positioning systems such as GPS or GALILEO, or by externally performed position detection involving triangulation performed for a mobile device carried by the user or by positioning of a mobile phone of the user by one or more base stations.

Also, the information indicative of a position of the user may indirectly indicate a position of the user, e.g. by detecting a presence of the user at a known location, e.g. by detecting interaction of the user with a stationary device or service, wherein the received information then indicates detection of presence of the user at the known location.

According to the first aspect, the method for performing travel assistance for a user further comprises a step of estimating or determining, while the user travels along the travel route on the current travel route segment, an estimated/determined arrival time at the travel route segment start location of a next travel route segment of the travel route, on the basis of the received signal and the provided travel route data. Here, estimating the estimated arrival time at the travel route segment start location of the next travel route segment may involve estimating a remaining travel time from the current location of the user as indicated by the received information to the travel route segment end location of the currently travelled travel route segment of the travel route.

Also, determining the arrival time may involve detecting a presence of the user at the travel route segment start location of the next travel route segment and/or at the travel route segment end location of the currently travelled travel route segment.

According to the first aspect, the method for performing travel assistance for a user further comprises determining one or more alternative travel route segments if the estimated or determined arrival time at the travel route segment start location of the next travel route segment is later than the travel route segment start time of the next travel route segment, and providing updated travel route data indicative of the one or more determined alternative travel route segments.

As described above, the first aspect advantageously proposes to detect, determine or even monitor the position of the user, while the user is travelling on a specific current travel route segment of the travel route that comprises plural route segments, each being associated with a certain means of transportation, and, based on the detected, determined or even monitored position of the user, to estimate and/or determine an arrival time on a start location of a next travel route segment of the travel route, in particular even the directly subsequent travel route segment, with respect to the current travel route segment.

Then, based on a comparison of the estimated/determined arrival time at the start location of a next travel route segment with the start time of the next travel route segment indicated in the travel route data, it is advantageously possible to dynamically detect, during travelling, that the user cannot follow the intended travel itinerary according to the originally provided travel route data when the estimated or determined arrival time at the travel route segment start location of the next travel route segment is later than the travel route segment start time of the next travel route segment.

For performing advantageous dynamic and complement travel assistance for the user, one or more alternative travel route segments can then be determined upon the detection that the user cannot follow the intended travel itinerary according to the originally provided travel route data when the estimated or determined arrival time at the travel route segment start location of the next travel route segment is later than the travel route segment start time of the next travel route segment.

Accordingly, the proposed methods advantageously allow to provide a more complemented travel assistance for the user in comparison to the prior art, and, in particular, allow to provide travel assistance even along the travel route involving a travel itinerary, which includes transfer via plural means of transportation and/or additional travel services, while the user is already travelling on the travel route, even in a case in which the user cannot follow the intended travel itinerary due to exceptional circumstances, in that a detected variation or chance of variation departing from the travel sequence of the intended travel itinerary can advantageously be used for redirection and/or rearrangements of the travel itinerary dynamically during travelling. Specifically, any variation and changes in the travel sequence can be advantageously detected dynamically during travelling, and rearrangements, re-booking and/or redirection is automatically enabled.

The determined one or more alternative route travel segments for dynamic redirection and/or rearrangement of the travel route may substitute the remaining part of the currently travelled travel route segment, the subsequent travel route segment and/or one or more next travel route segments.

In particular, three preferred aspects, depending on the particular travel situation and available means of transportation, may be as follows.

According to a preferred aspect for determining alternative travel route segments, determining one or more alternative travel route segments may comprise determining one or more alternative travel route segments for the currently travelled travel route segment, wherein a travel segment end location of a last of the one or more alternative travel route segments may corresponds to the travel route start location of the next travel route segment and an estimated arrival time at the last of the one or more alternative travel route segments preferably is earlier or equal to the travel route segment start time of the next travel route segment.

In such scenario, determining one or more alternative travel route segments may be provided such that an alternative travel route can be travelled by the user such as to arrive timely at the next travel route segment so as to be able to follow the initial travel route itinerary from the travel route start location of the next travel route segment. For example, if a user is travelling by train, bus, car, taxi, rental car etc. to an airport, where the next travel route segment is associated with a flight (transfer via plane as means of transportation), and it is detected that the user may miss the flight, alternative route segments may involve modifying the travelled route (e.g. to avoid traffic jams indicated by navigation and/or traffic data), changing trains, ordering a taxi, etc. so as to allow the user to arrive in time at the airport for catching the flight.

According to another preferred aspect for determining alternative travel route segments, determining one or more alternative travel route segments may comprise determining one or more alternative travel route segments for the next travel route segment, wherein a travel segment start location of a first of the one or more alternative travel route segments preferably corresponds to the travel route start location of the next travel route segment and a travel route segment start time of the first of the one or more alternative travel route segments is preferably later that the estimated arrival time at the travel route segment start location of the next travel route segment.

In such scenario, determining one or more alternative travel route segments may be provided for the next route start segment such that an alternative travel route can be travelled by the user such as to consider and cope with the expected late arrival at the route segment start location of the next travel route segment. For example, if a user is travelling by train, bus, car, taxi, rental car etc. to an airport, where the next travel route segment is associated with a flight (transfer via plane as means of transportation), and it is detected that the user may miss the flight, alternative route segments may involve automatically booking a later flight from the same airport and optionally also cancelation of a reservation/booking for the initially booked flight.

According to yet another preferred aspect for determining alternative travel route segments, determining one or more alternative travel route segments may comprise determining one or more alternative travel route segments for the specific travel route segment and one or more next travel route segments. Then, a travel segment end location of a last of the one or more alternative travel route segments preferably corresponds to the travel route start location of one of the travel route segments following the one or more next travel route segments and an estimated arrival time at the last of the one or more alternative travel route segments preferably is earlier or equal to the travel route segment start time of said one of the travel route segments following the one or more next travel route segments, or a travel segment end location of a last of the one or more alternative travel route segments preferably corresponds to the travel route destination location and an estimated arrival time at the last of the one or more alternative travel route segments preferably is earlier or equal to the travel route arrival time.

In such a scenario, alternative route segments may be determined so as to rearrange parts of the travel route including plural initially planned travel routes or even the complete remaining travel route up to the final travel route destination. For example, if a user is travelling by train, bus, car, taxi, rental car etc. to an airport, where the next travel route segment is associated with a flight (transfer via plane as means of transportation), and it is detected that the user may miss the flight, alternative route segments may involve automatically booking a later flight from the same airport (potentially even to another airport) and optionally also cancelation of a reservation/booking for the initially booked flight, and in addition, further route segments after arrival at the target airport may be determined (including, e.g. changing a remaining travel route, adding/changing bus/train/taxi/rental car transfers, adding stopovers with associated hotel accommodation etc. and/or changing hotel accommodation at the destination).

According to a preferred aspect, the information indicative of a position of the user may be received from a mobile device which is preferably configured to determine a current position of the mobile device (e.g. via a satellite positioning system such as GPS or GALILEO) and to transmit position information indicative of the position of the mobile device, wherein the arrival time at the travel route segment start location of the next travel route segment is preferably estimated or determined on the basis of a current time and the position of the mobile device indicated by the position information.

Here, the mobile device is preferably a mobile device carried by the user while travelling such as, e.g., a mobile computer (e.g. a notebook or tablet computer), a mobile phone, or a smart phone, or the mobile device may be a device installed on a means of transportation associated with the current travel route segment such as, e.g., a navigation device or other positioning device installed on a train, bus, taxi, car, or rental car used by the user while travelling on the current travel route segment.

According to another preferred aspect, the information indicative of a position of the user may be received from a stationary device being configured to determine a position of the user (e.g. if the presence of the user or a of mobile device carried by the user is detected close to a stationary device of known location) and to transmit position information indicative of the position of the user, and the arrival time at the travel route segment start location of the next travel route segment is preferably estimated or determined on the basis of a current time and the position of the user indicated by the position information.

According to another preferred aspect, the information indicative of a position of the user is received from a mobile interaction detecting device being configured to detect an interaction of the user and to transmit position information indicative of a location of the interaction detecting device, and the arrival time at the travel route segment start location of the next travel route segment is preferably estimated or determined on the basis of a current time and the position of the interaction detecting device indicated by the position information.

According to another preferred aspect, the information indicative of a position of the user may be received from a stationary interaction detecting device being located at the travel route segment end location of the current travel route segment or at the travel route segment start location of the next travel route segment, the stationary interaction detecting device being preferably configured to detect an interaction of the user and to transmit interaction information indicative of a time of detected interaction of the user, and the arrival time at the travel route segment start location of the next travel route segment is preferably determined on the basis of the time of detected interaction of the user indicated by the interaction information and the position of the interaction detecting device.

Regarding detectable interactions of the user in above preferred aspects, the interaction detected by the interaction detecting device is preferably at least one of a checkout interaction of the user in which the user checks out from a means of transportation or travel service associated with the current travel route segment, a check-in interaction of the user in which the user checks in for a means of transportation or a travel service associated with the next travel route segment, an automatic payment interaction of the user in which the user performs automatic payment for a means of transportation or a travel service associated with the current travel route segment or with the next travel route segment, and an identification interaction of the user in which the user is identified at the interaction detecting device.

In the above, in particular using automatic payment as a detectable interaction is a very advantageous concept for detecting a travel progress of the user. For example, in case the user initiates automatic payment of a means of transportation, upon arrival at a respective travel route end segment location, the user can conveniently pay only for completed route segments, while in addition, receiving payment confirmation data for a means of transportation enables to reliably detect that the user has completed travelling a certain travel rout segment. Preferred embodiments described below with respect to the accompanying drawings involve automatic payment steps involving plural contractors (service providers) which provide the respective mode of transportation, while payment can be implemented into the method for complemented travel assistance, wherein payment is managed at the server/cloud system.

According to another preferred aspect, the method may further comprise automatically requesting a reservation for means of transportation or travel service associated with one or more of the determined alternative travel route segments. This has the advantage that the user does not need to worry about re-arrangements, and booking and making reservations for means of transportation is automatically performed at the server side or in the cloud service, and booking information and/or electronic tickets can be sent to the mobile device of the user so that the user is automatically provided with electronic tickets for means of transportation associated with alternative travel route segments upon determination of the alternative travel route segments.

According to another preferred aspect, the method may further comprise providing updated travel route data to a mobile device of the user, the updated travel route data being indicative of the one or more alternative travel route segments of the travel route. Hence, upon determination of the alternative travel route segments, the user can be provided automatically with updated travel route data indicating the determined alternative travel route segments so that the user keeps being dynamically updated on travel re-arrangements and re-directions dynamically during travelling.

According to another preferred aspect, the travel route segments may include one or more actively travelled travel route segments being associated with an actively travelled means of transportation, in particular with one of travelling on foot, travelling by bike, travelling by car, travelling by rental car as the means of transportation, and the method may then preferably further comprise providing navigation data to a mobile device of the user in case the user is travelling on an actively travelled travel route segment.

According to a second preferred aspect, there is proposed a system for performing travel assistance for a user, preferably according to a method of at least one of the above-described aspects. The system may be configured to be communicably connected to one or more databases, one or more server computers, one or more mobile devices of service providers, one or more stationary devices of service providers, one or more stationary devices of users and/or one or more mobile devices of users. Such system can provide technical advantages similar to technical advantages corresponding to aspects as described above.

According to the second preferred aspect, the system comprises data providing means for providing travel route data indicative of a travel route of the user. The travel route data may in some embodiments include data being indicative of a travel route start location, a travel route start time at the travel route start location, a travel route destination location, and/or a travel route arrival time at the travel route destination location. The travel route data may in some embodiments include data being indicative of a sequence of a plurality of subsequent travel route segments of the travel route, each of the travel route segments in the data being associated with one means of transportation to be used for travelling on the respective travel route segment or one travel service and each travel route segment being defined by a respective travel route segment start location, a respective travel route segment start time, a respective travel route segment end location and/or a respective travel route segment end time.

According to the second preferred aspect, the system further comprises information receiving means for receiving, while the user travels along the travel route on a current travel route segment, information indicative of a position of the user and arrival time estimating/determining means for estimating, while the user travels along the travel route on the current travel route segment, an estimated arrival time at the travel route segment start location of a next travel route segment of the travel route, on the basis of the received signal and the provided travel route data, and/or determining, while the user travels along the travel route on the current travel route segment, an actual arrival time at the travel route segment start location of the next travel route segment of the travel route, on the basis of the received information and the provided travel route data.

According to the second preferred aspect, the system further comprises alternative travel route segment determining means for determining one or more alternative travel route segments, if the estimated or determined arrival time at the travel route segment start location of the next travel route segment is later than the travel route segment start time of the next travel route segment. The data providing means may provide updated travel route data indicative of the one or more alternative route segments determined by the alternative travel route segment determining means.

Preferably, the system further comprises one or more mobile devices configured to determine a current position of the respective mobile device and to transmit position information indicative of the position of the mobile device to the information receiving means, one or more stationary devices being configured to determine a position of the user and to transmit position information indicative of the position of the user to the information receiving means, one or more mobile interaction detecting devices being configured to detect an interaction of the user and to transmit position information indicative of a location of the respective interaction detecting device to the information receiving means, and/or one or more stationary interaction detecting devices being located at the travel route segment end location of the current travel route segment or at the travel route segment start location of the next travel route segment, the stationary interaction detecting device being configured to detect an interaction of the user and to transmit interaction information indicative of a time of detected interaction of the user to the information receiving means.

Preferably, the system further comprises requesting means for automatically requesting a reservation for means of transportation or travel service associated with one or more of the determined alternative travel route segments.

Preferably, the data providing means is configured to provide updated travel route data to a mobile device of the user, the updated travel route data being indicative of the one or more alternative travel route segments of the travel route.

Preferably, the travel route segments include one or more actively travelled travel route segments being associated with an actively travelled means of transportation, in particular with one of travelling on foot, travelling by bike, travelling by car, travelling by rental car as the means of transportation, and the data providing means is preferably configured to provide navigation data to a mobile device of the user in case the user is travelling on an actively travelled travel route segment.

According to a third preferred aspect, there may be provided a computer program product comprising computer program means to be executed on system of one or more server computers being configured to be communicably connected to one or more databases, one or more server computers, one or more mobile devices of service providers, one or more stationary devices of service providers, one or more stationary devices of users and/or one or more mobile devices of users, the computer program means causing the server computer to execute the steps of at least one of a method of one of the above-described aspects.

Further aspects may be as follows.

There may be provided a method for travel assistance for a user in a computer and communication network communicably connecting a server/server system/cloud system and a mobile device of a user. The method may comprise: providing travel itinerary information (e.g. travel route data as discussed above), the information may further comprise a user ID and a contractor ID; sending the user ID to the mobile device in the communication network; sending the contractor ID to a first client device within the communication network; receiving a request for payment from the first client device, the request comprising the user ID and the contractor ID; determining whether the received user ID and contractor ID match the travel itinerary information; and confirm payment if a match is found. Such aspect may be used to improve automatic payment during travelling, when a user intends to automatically pay a means of transportation at the end location of a route segment.

In the above aspect, during a journey, a mobile device can be provided with the information needed to identify itself to client services (such as travel services or transportation services, e.g. a bus transfer, a train transfer, a taxi transfer etc.), such that any bookings, tickets or reservations associated with the mobile device's user can be accessed by providing the user ID (for each travel route segment, even if plural service providers are involved during travelling on the travel route). Additionally, payment can be conveniently handled for services and transportation rendered, as the client device can request payment after delivery of the booked service, using the user ID and its contractor ID.

According to further aspects, the step of providing travel itinerary information may further comprise generating location and time information for the travel itinerary. The method may further comprise receiving location information from the mobile device, wherein the location information is associated with a time. This may comprise receiving GPS location data provided by the mobile device, or alternatively location data may be provided by the communication network, e.g. related to the cell location that the mobile device is currently logged into. Further, it may be determined whether the received location information matches with the location information for the travel itinerary at the associated time. If no match is found, the method may comprise contacting a third party service in order to generate an updated travel itinerary. If the location information does not match, it is likely that the mobile device is no longer following the travel itinerary, but the user may e.g. have missed a flight or may have missed a train or bus connection. The method may further comprise generating updated travel itinerary information (e.g. determining one or more alternative travel route segments as discussed in aspects above) which may further comprise user ID and updated contractor ID information (e.g. with respect to contractors providing travel services or transportation services associated with the newly determined alternative travel route segments).

According to some aspects, the step of providing travel itinerary information may further comprise generating location and time information for the travel itinerary. The method may further comprise receiving location information from the mobile device, wherein the location information may be associated with a time, and, if the request for payment is received, the received location information may be compared with location information associated with the travel itinerary information. Thus, it can be determined whether the mobile device is still following the travel itinerary. If it is determined that the received location information matches the stored location information, payment may be confirmed. This way, payment fraud using the user ID and contractor ID data of past or previous bookings may be prevented by ensuring that payment is only authorized for travel segments which have been recently completed by the mobile device.

Therein, the step of comparing the received location information with location information associated with the travel itinerary information may comprise comparing the received location information with a database of predetermined location data for the contractor. This serves as a protection against manipulation of the location information associated with the contractor. Alternatively, location information may be received from a third party device associated with the contractor. Again, payment would then only be authorized if the location information received from the mobile device and the location information received from the contractor's device match.

Travel itinerary information (travel route data) may comprise data indicating a plurality of travel route segments, and the user ID may be associated with each travel route segment, while at least two different contractor ID's may respectively be associated with two different travel segments. Thus, a user can use a single user ID throughout the journey and minimize the processing power and storage space needed for travel management at the mobile device. If the journey involves a large number of different means of transport, or travel services such as ticket and hotel reservations, the management of the corresponding different booking reference codes and the like might otherwise require a considerable amount of computational resources at the mobile device. Thus, a single user ID for all travel segments constitutes a considerable reduction in storage and processing requirements.

According to some aspects, a travel ID may be generated which comprises the user ID and further information related to the travel itinerary. The steps of sending, receiving and determining the user ID may then comprise sending, receiving and determining the user ID as part of the travel ID. The travel ID may still be constant for the whole journey, but it allows the mobile device to provide further information, e.g. related to booking details, connections between different modes of transport, or the like, to client devices during the journey.

According to a further aspect a server in a communication network may be provided, comprising a database containing predetermined travel itinerary information, the information comprising a user ID and a contractor ID, the server being adapted to receive in a request for payment a user ID and a contractor ID, and, upon receipt of the request for payment including the user ID and the contractor ID, adapted to test if a matching user ID and contractor ID are stored in the database and confirm payment if a match is found. Thus, a server can perform those steps of travel management which require a comparatively large amount of processing power, and the server can further handle a secure payment system for authorizing payments as soon as the associated service has been completed.

As mentioned above, the server in the computer network may comprise a database storing predetermined information on a travel route/travel itinerary (e.g. including travel route data as discussed above). In addition, the database may store for each user and for each travel itinerary a travel ID, a user ID, and/or one or plural contractor IDs of contractors/providers who provide travel services, transportation services, and/or travel payment services etc. or respective service ID. The server may have a user interface adapted to store information about the travel itinerary.

A mobile or stationary first client may be connectable to the server and be configured with one or more applications for receiving travel ID input (inputting travel ID, user prompt, via RFID, or generally via detecting a user interaction as discussed above), e.g. for automatic payment by a user, when travelling along the travel route.

The first client may be configured to send a request for payment for a travel service or means of transportation used by the user to the server, the request including at least a travel ID and/or user ID and a contractor ID of the contractor providing the transport and/or travel service to be paid and/or a respective service ID. Upon receipt of the request, the server may receive the request as discussed above, and confirm a payment for a travel route service or a transport service provided by the contractor, if a match between a received travel ID (or user ID) and a contractor ID (or service ID) is found in the database, automatic payment can be confirmed and/or executed.

Optionally, a second client device (e.g. a mobile device carried by the user) is configured to interact with the first client device for identifying a user ID and/or travel ID and indicating the a user ID and/or travel ID to the first client device, or having a function of having a travel ID or user ID being embedded for being identified by the first client device (e.g. via RFID, Bluetooth, WLAN, visual information on a display screen such as e.g. displayed ID numerals or displayed one dimensional or two dimensional barcodes etc.). Optionally, the second client device allows for position determination e.g. by satellite navigation system such as GPS or Galileo or by wireless triangulation. Position information may be transferred regularly or upon request to the server via wireless communications such via another client by WLAN (e.g. via the first client) or directly e.g. via UMTS, LTE or other wireless long range communication technologies.

Upon receipt of position information, the server may be adapted to confirm and/or initiate automatic payment only if the determined location of the second client indicated in the received position information matches a predetermined location (e.g. payment of transport services is only confirmed if the determined location of the user/second client device matches the travel segment end location of a travel segment associated with the means of transportation to be paid, of a travel service is only paid if the determined location of the user/second client device matches the location of the associated service, e.g. with a location of a hotel used by the user).

A system may comprise the above-described server and a client (such as e.g. the first client discussed above) in a communication network, wherein the client comprises means for reading a user ID and means for storing a contractor ID, and wherein the client is adapted to prompt for user ID input and to send a request for payment comprising the read user ID and the stored contractor ID to the server.

According to an aspect, the system may further comprise a mobile device (such as e.g. the second client discussed above), wherein the mobile device comprises means for storing a user ID and means for providing the user ID to the client.

### BRIEF DESCRIPTION OF DRAWINGS

In the following, embodiments are explained in detail with reference to the accompanying drawings. Therein,
- Fig. 1A: is a schematic overview of a communication network;
- Fig. 1B: is a schematic view of a server system according to a preferred embodiment;
- Fig. 2: is an overview of the overall setting of an embodiment, showing the various aspects involved in travel booking, guidance and payment handling;
- Fig. 3: is a flow diagram illustrating an embodiment;
- Fig. 4: is a schematic overview that illustrates the generation of travel itinerary information;
- Fig. 5: shows the use of travel itinerary information for the provision of guidance during the journey;
- Fig. 6: is a schematic view of the processing involved during the generation of travel itinerary information;
- Fig. 7: illustrates an embodiment of the travel guidance system; and
- Fig. 8: schematically illustrates the requesting and handling of payment for a specific travel segment for an embodiment.

### DETAILED DESCRIPTION OF DRAWINGS AND EMBODIMENTS

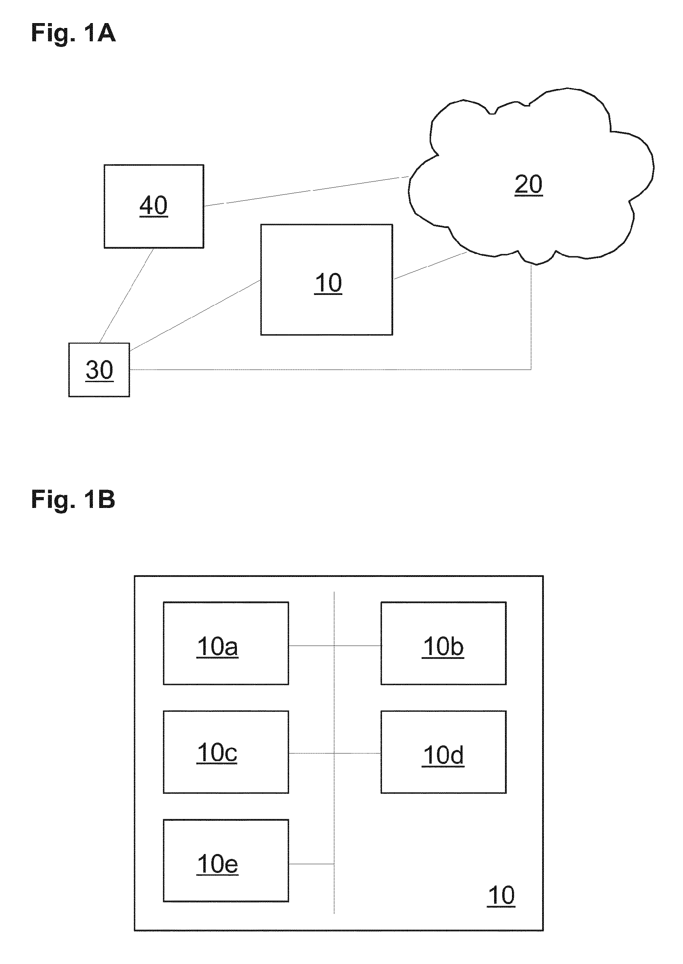

The preferred embodiments of methods, systems and devices for travel assistance described herein are exemplarily directed to a smart phone/cloud based E2E travel assistance, which may be implemented in a communication network as shown in Fig. 1A.

Therein, a server 10 (or server system) and/or cloud computing facilities 20 are provided and are adapted for wireless or wire-bound communication with a mobile device 30 used by a user, such as e.g. a smart phone, laptop, or tablet computer. The mobile device 30 can communicate with the server 10 and/or with one or more service applications within the cloud 20, in order to receive travel booking assistance, travel assistance, travel guidance and/or management assistance.

A client device 40 by a third party (e.g. service provider, such as e.g. a taxi company, hotel, bus operator or the like) may further be provided within the communication network and may communicate with the server 10 and/or the cloud service 20. The client device 40 may further be adapted to communicate via a long-range communication system or even via a short-range communication system, such as e.g. Bluetooth or infrared, with the mobile device 30.

Alternatively or in addition, the client device 40 may be adapted to receive data displayed on the mobile device's display via a scanner or a camera, or the client device 40 may be provided with a card reader or the like for reading an electronic or printed ID card provided by the user of the mobile device 30.

Fig. 1B is a schematic view of a server system 10 according to a preferred embodiment. The server 10 (or server system comprising plural server computers) for performing travel assistance for a user comprises data providing means 10a for providing travel route data indicative of a travel route of the user, tech travel route data being accessible by the user via data communication between the server 10 and the user's mobile device 30.

As described in more detail below, the travel route data provided by the data providing means 10a includes data being indicative of a travel route start location, a travel route start time at the travel route start location, a travel route destination location, and a travel route arrival time at the travel route destination location, and data being indicative of a sequence of a plurality of subsequent travel route segments of the travel route, each of the travel route segments in the data being associated with one means of transportation to be used for travelling on the respective travel route segment or one travel service and each travel route segment being defined by a respective travel route segment start location, a respective travel route segment start time, and a respective travel route segment end location

The server 10 further comprises information receiving means 10b for receiving, while the user travels along the travel route on a current travel route segment, information indicative of a position of the user and arrival time estimating/determining means 10c for estimating, while the user travels along the travel route on the current travel route segment, an estimated arrival time at the travel route segment start location of a next travel route segment of the travel route, on the basis of the received signal and the provided travel route data, and/or determining, while the user travels along the travel route on the current travel route segment, an actual arrival time at the travel route segment start location of the next travel route segment of the travel route, on the basis of the received information and the provided travel route data.

Furthermore, the server 10 comprises alternative travel route segment determining means 10d for determining one or more alternative travel route segments, if the estimated or determined arrival time at the travel route segment start location of the next travel route segment is later than the travel route segment start time of the next travel route segment, and requesting means 10e for automatically requesting a reservation for means of transportation or travel service associated with one or more of the determined alternative travel route segments.

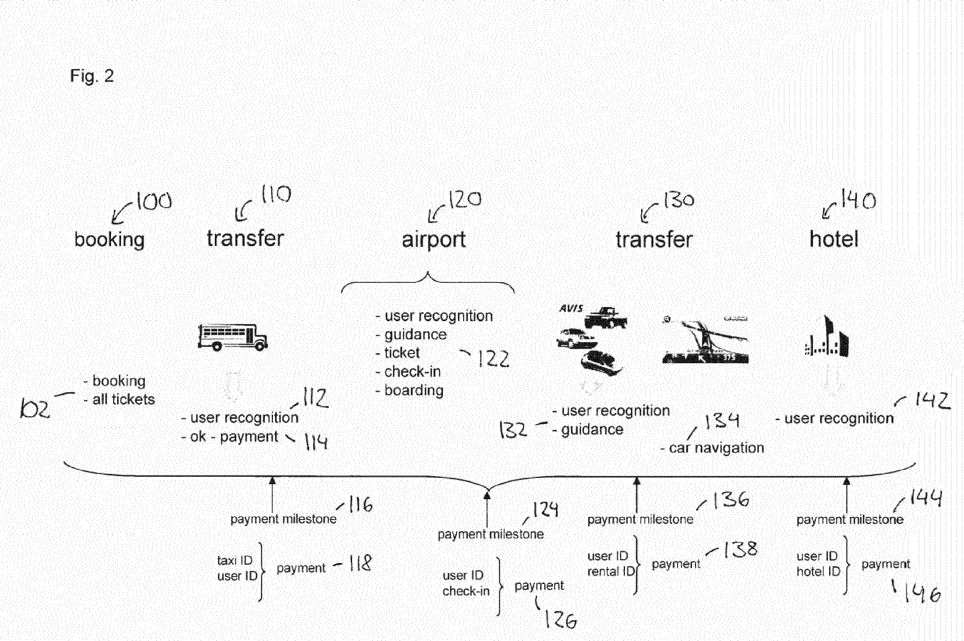

As exemplarily shown in Fig. 2, a journey of a user may start by a booking step 100, wherein a server 10 (or a cloud service 20, see above) may automatically, on the basis of user input and potentially under consideration of additional user preferences, arrange the planning of a travel route and the booking of plural or all necessary tickets that enable the user to travel to his/her destination, even if the journey may involve one or plural modes of transport (means of transportation, e.g. car transfer such as taxi transfer, use of a private car or rental car, train transfers, bus transfers, boat transfers, flights, and even biking and/or walking) and may further include the booking of additional travel services such as hotel accommodation and/or of tickets to cultural, sporting or social events.

During the booking step 100, as will be explained in greater detail below, a user can enter different types of travel information, e.g. intended travel date, intended travel locations including travel route start location and travel route destination location and optionally intermediate travel route locations, intended times of departure and/or arrival, preferences for means or transportation and/or travel services or the like. On the basis of the input travel information, booking is performed in which the user is provided with a travel itinerary for a travel route which is pre-arranged and pre-booked (partially or as a whole). For example, as exemplarily shown in Fig. 2, the travel itinerary may involve an initial bus transfer 110 to a first airport 120 for a flight to another second airport close to the travel destination and a final transfer 130 by rental car from the second airport to a hotel 140.

Specifically, upon completing the booking step 100, travel itinerary information about the journey can be generated and can be stored at the server 10 and/or in the cloud 20, as will be explained in detail below. The server/cloud system provides travel route data being indicative of the travel route of the user. The travel route data includes data being indicative of particulars of the travel route of the user including information on a travel route start location, a travel route start time at the travel route start location, a travel route destination location, and a travel route arrival time at the travel route destination location.

In addition, the travel route data includes data being indicative of a sequence of a plurality of subsequent travel route segments of the travel route, wherein each of the travel route segments indicated in the data are associated with one mode of transport (means of transportation) to be used for travelling on the respective travel route segment or one travel service and each travel route segment being defined by a respective travel route segment start location, a respective travel route segment start time, and a respective travel route segment end location.

In the example shown in Fig. 2, the first travel route segment 110 of the journey exemplarily comprises a bus transfer 110 (or taxi transfer) to the airport. Accordingly, the first travel route segment in Fig. 2 is exemplarily associated with a bus transfer 110 (or taxi transfer) as mode of transport (means of transportation). A route segment start location thereof may be represented by a first bus stop close to the travel route start location, and a route segment end location thereof may be represented by a second bus stop at the first airport 120 (or first and second taxi stands). Travel route segment start and end times may represent respective a respective bus departure time at the first bus stop and a respective bus arrival time at the second bus stop (or departure and arrival times via taxi transfer).

Therein, according to a preferred embodiment, as will be explained in detail below, user recognition 112 may be performed as the user presents a user ID, e.g. a barcode that is displayed on the user's mobile device, to a suitable device (scanner, camera or the like) provided in the bus (or taxi). The user ID can then either be compared to a list of bookings within the bus (or taxi) company's system (as a service provider), or the server (or cloud service) can be contacted in order to confirm the user's booking details. If the user has been successfully recognized by matching the user ID to data stored locally or retrieved over the communication network, automatic payment may be arranged via the server in step 114, as will be described in detail below.

An embodiment of the inventive method or server may recognize automatically that a payment milestone 116 has been reached upon completion of first travel route segment 110 of the journey, and the transmission of e.g. a taxi ID and a user ID may be arranged automatically in order to confirm and authorize payment for segment 110 of the journey. Details of the automatic recognition of payment milestones and of the processing required for handling payment will be described below.

Here, the advantage can be provided that the user can automatically pay for transportation for a certain travel route segment upon arrival at a respective travel route segment end location. This not only advantageously allows the user to automatically pay for transfer in completed travel route segments, but is it furthermore advantageously possible to automatically determine travel progress of the user travelling along the travel route. For example, in the above example, if the user automatically performs automatic payment for the bus transfer 110 (or taxi transfer) at the respective route segment end location, it can be determined that the user has completed the respective route segment (i.e. that the user has arrived at the respective route segment end location) and a registered time of payment can indicate the respective route segment arrival time.

In the example shown in Fig. 2, the journey exemplarily continues with an airport/flight segment 120, where, again, user recognition may be performed. Services related to this segment of the journey, such as guidance within the airport, check-in and ticket/boarding card handling and the like may be performed (step 122). The guidance may e.g. comprise voice guidance, or it may comprise displaying map or directional information on the mobile device's display (e.g. vocal and/or visual guidance from a taxi stand/bus stop where the user has arrived at the airport to a check-in area/or to a departure gate at the airport).

Upon completion of this airport/flight segment 120 (after completing the flight from the first airport to the second airport), another payment milestone 124 may be reached and automatic payment 126 may be handled by the server upon receipt of e.g. user ID and check-in data.

Exemplarily, if a further route segment 130 of the journey comprises a car journey e.g. in a rental car, in addition to the user recognition and guidance steps 132 mentioned above, car navigation 134 may be provided by the server, using location information sent be the user's mobile device and providing a map view and/or driving directions which are displayed on the mobile device's display.

This route segment 130 may also constitute a payment milestone 136, and automatic payment 138 may be handled as will be described below.

Finally, the journey may end at a hotel 140, where, again, user recognition 142 may be performed, and a payment milestone 144 may be reached, which triggers the automatic handling of payment 146 at the server upon receipt of the user ID and a hotel ID.

In general, according to embodiments, the user may travel the travel route according to the travel route data along plural subsequent travel route segments, each route segment being associated with a specific mode of transport (means of transportation). Possible means of transportation may be using a car (private car or rental car, or even car sharing), a bus transfer, a train transfer, a subway transfer, a tram transfer, a taxi transfer, flights, boat/ferry/ship transfers, biking, or even walking on foot or other kinds of means of transportation. A segment may also be associated with a travel service such as hotel accommodation (e.g. a hotel accommodation at the travel route destination or also a hotel accommodation along the travel route such as a stop-over at an intermediate travel route location).

For example, in the above example of Fig. 2, the travel route comprises four travel route segments, i.e. a first travel route segment being associated with a bus transfer 110 to the first airport (or taxi transfer) as the means of transportation, a second travel route segment being associated with a flight transfer 120 from the first to the second airport by plane as the means of transportation, a third travel route segment being associated with a transfer 130 by rental car as the means of transportation from the second airport to the hotel 140. In addition, one may consider that the travel route comprises further travel route segments in which the user may be travelling on foot (or other self-organized transfers such as by bike or private car etc.) such as e.g. in case the user in a travel route segment travels on foot, by bike or by private car to the first bus stop, where the travel route segment of the bus transfer (110) starts. A further travel route segment may be represented by the transfer (e.g. on foot) from the second bus stop at the first airport to a check-in area or terminal/gate area thereof. Similarly, a further travel route segment may be represented by the transfer (e.g. on foot) from the baggage claim area or terminal/gate area at the second airport to a rental car parking area or rental car pick-up area for the subsequent rental car transfer 130.

In other words, travel route segment may be provided such that a travel route segment end location identically corresponds to a travel route segment start location of a subsequent travel route segment. Alternatively, travel route segments may be represented by segments associated with commercial means of transportation (e.g. taxi, bus, train, subway, tram, flight, boat, rental car etc.) and user may be required to travel in a self-organized manner (e.g. on foot) from a travel route segment end location to a travel route segment start location of a subsequent travel route segment. Nevertheless, it is preferred that navigation data is even provided to the user's mobile device 30 in between route segments for improved travel guidance.

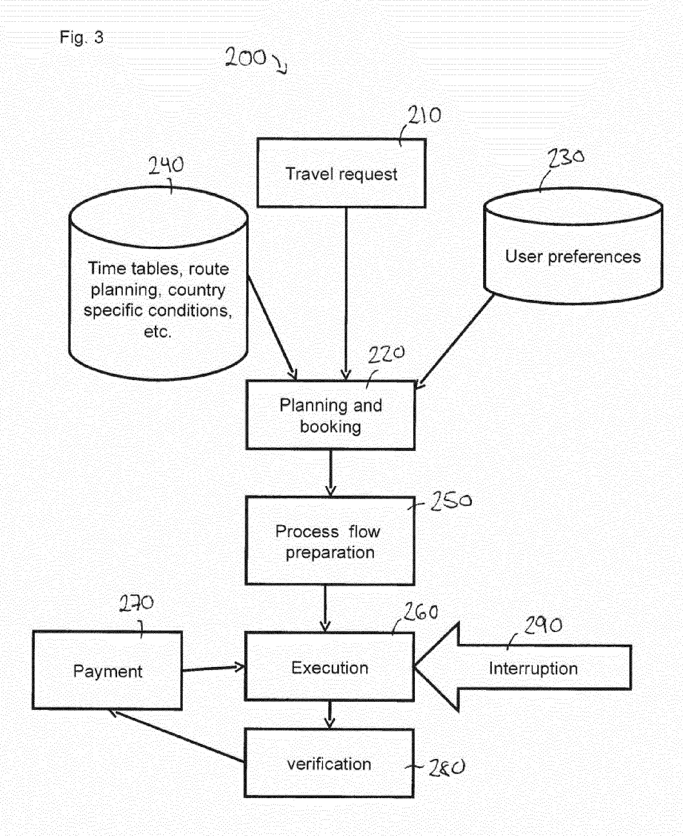

Fig. 3 gives an exemplary overview of a process 200 which may be executed at a server 10 or as a cloud service and which enables the travel management, travel assistance and guidance described above with reference to Fig. 2.

In step 210, a user may send a travel request via any electronic device (a personal computer, notebook, tablet computer, or smart phone, or even via public computer terminals) that is in communication with the server 10 or cloud service. In step 220, processing may be performed for planning and booking the journey (e.g. creating and providing travel route data according to a user's input and user preferences), wherein user preferences 230 and/or timetables, route planning and other travel information 240 may be used. As user preferences 230 for the requested journey, the user may e.g. define at least one of: destination location (or a sequence of locations as stopover points), start location, starting time, arrival time (or a sequence of arrival times at the stopover points), preferred type of accommodation, preferred transportation means, or preferred transportation operators (transportation service providers).

If, e.g., a user requests for a journey to the Niagara Falls to be booked, the planning and booking step 220 may comprise, e.g., a taxi reservation, flight booking, preparation of guidance to/through the airport, flight ticket(s), fast check-in and/or preparation of security check guidance to reach the rental car station, car reservation and/or preparation for car navigation, entrance fee at the Niagara falls, hotel accommodation etc.

According to some embodiments, these initial steps 210, 220 may not be part of the travel management, assistance and guidance method performed at the server 10, but may either be skipped or may be performed by another device or by several devices within the communication network. Independently of whether the initial requesting, planning and booking steps 210, 220 have been performed at the server 10 or not, at subsequent step 250 travel itinerary information (travel route data) is provided, which is stored at the server 10. The travel itinerary information may further comprise a user ID and a booking reference and/or contractor's ID for each segment of the planned journey.

During execution of the travel (step 260), a user can verify his/her identity by presenting the user ID, which may comprise a number, a barcode, a signal that is communicated between the user's mobile device and a third-party device e.g. via Bluetooth or infrared wireless communication, or the user ID may comprise an electronic or print ID card which the user can present to a suitable reader or scanner. Thus, any third party clients 40, such e.g. airline check-in systems, can verify the user's ID without the user having to produce separate booking references and proprietary ID cards at each segment of the journey.

The user may be supplied with a single form of user ID, which he/she can use throughout the journey. In some embodiments, the server 10 or cloud service may handle all of the necessary processing required to convert the user ID into the relevant booking information which is then transferred to the third party client 40 (e.g. the airline check-in system). Alternatively, the user ID could have been transferred to the third party client 40 by the server 10, e.g. at the time of booking, and the third party client 40 may thus verify the user ID without needing to contact the server 10.

Once the mobile device 30 has identified itself to the third party client 40 (such as e.g. the airline check-in system), automatic payment for that segment of the journey can be processed at step 270, as the third party client 40 may then send a payment request to the server 10, enclosing the user ID and a contractor's ID or the like. The server 10 may then verify both the payment request and the progress of the journey in step 280 and authorize payment.

Verification 280 of the progress of the journey may comprise receiving location information from the user's mobile device and comparing the received location information and an associated time with location and time information generated during step 220 for the travel itinerary. If the received location information does not match the travel itinerary, it is assumed that there has been an interruption of the travel execution (step 290), e.g. due to a flight being delayed, due to missing a connection between two transportation segments or due to an emergency situation.

Specifically, performing travel assistance for a user further comprises a step of receiving information indicative of a position of the user while the user travels along the travel route on a current travel route segment associated with a specific means of transportation according to the travel itinerary.

Here, the information indicative of a position of the user may directly indicate a position of the user, e.g. by position detection performed by a mobile device carried by the user, e.g. by a mobile device having positioning capabilities using satellite positioning systems such as GPS or GALILEO, or by externally performed position detection involving triangulation performed for a mobile device carried by the user or by positioning of a mobile phone of the user by one or more base stations. Also, the information indicative of a position of the user may indirectly indicate a position of the user, e.g. by detecting a presence of the user at a known location, e.g. by detecting interaction of the user with a stationary device or service, wherein the received information then indicates detection of presence of the user at the known location.

Furthermore, the method for performing travel assistance for a user further comprises a step of estimating or determining, while the user travels along the travel route on the current travel route segment, an estimated/determined arrival time at the travel route segment start location of a next travel route segment of the travel route, on the basis of the received signal and the provided travel route data. Here, estimating the estimated arrival time at the travel route segment start location of the next travel route segment may involve estimating a remaining travel time from the current location of the user as indicated by the received information to the travel route segment end location of the currently travelled travel route segment of the travel route. Also, determining the arrival time may involve detecting a presence of the user at the travel route segment start location of the next travel route segment and/or at the travel route segment end location of the currently travelled travel route segment.

For suitable rearrangements and redirection in case of detection of an interruption of the intended travel itinerary, the method for performing travel assistance for a user further comprises determining one or more alternative travel route segments if the estimated or determined arrival time at the travel route segment start location of the next travel route segment is later than the travel route segment start time of the next travel route segment.

Accordingly, the position of the user can be advantageously be detected, determined or even monitored, while the user is travelling on a specific current travel route segment of the travel route that comprises plural route segments, each being associated with a certain means of transportation, and, based on the detected, determined or even monitored position of the user, to estimate and/or determine an arrival time on a start location of a next travel route segment of the travel route, in particular even the directly subsequent travel route segment, with respect to the current travel route segment.

Then, based on a comparison of the estimated/determined arrival time at the start location of a next travel route segment with the start time of the next travel route segment indicated in the travel route data, it is advantageously possible to dynamically detect, during travelling, that the user cannot follow the intended travel itinerary according to the originally provided travel route data when the estimated or determined arrival time at the travel route segment start location of the next travel route segment is later than the travel route segment start time of the next travel route segment.

For performing advantageous dynamic and complement travel assistance for the user, one or more alternative travel route segments can then be determined upon the detection that the user cannot follow the intended travel itinerary according to the originally provided travel route data when the estimated or determined arrival time at the travel route segment start location of the next travel route segment is later than the travel route segment start time of the next travel route segment.

Accordingly, a more complemented travel assistance for the user is provided in comparison to the prior art, and, in particular, it is enabled to provide travel assistance even along the travel route involving a travel itinerary, which includes transfer via plural means of transportation and/or additional travel services, while the user is already travelling on the travel route, even in a case in which the user cannot follow the intended travel itinerary due to exceptional circumstances, in that a detected variation or chance of variation departing from the travel sequence of the intended travel itinerary can advantageously be used for redirection and/or rearrangements of the travel itinerary dynamically during travelling.

Specifically, any variation and changes in the travel sequence can be advantageously detected dynamically during travelling, and rearrangements, re-booking and/or redirection is automatically enabled.

The determined one or more alternative route travel segments for dynamic redirection and/or rearrangement of the travel route may substitute the remaining part of the currently travelled travel route segment, the subsequent travel route segment and/or one or more next travel route segments.

For example, determining one or more alternative travel route segments may comprise determining one or more alternative travel route segments for the currently travelled travel route segment, wherein a travel segment end location of a last of the one or more alternative travel route segments may corresponds to the travel route start location of the next travel route segment and an estimated arrival time at the last of the one or more alternative travel route segments preferably is earlier or equal to the travel route segment start time of the next travel route segment.

In such scenario, determining one or more alternative travel route segments may be provided such that an alternative travel route can be travelled by the user such as to arrive timely at the next travel route segment so as to be able to follow the initial travel route itinerary from the travel route start location of the next travel route segment. For example, if a user is travelling by train, bus, car, taxi, rental car etc. to an airport, where the next travel route segment is associated with a flight (transfer via plane as means of transportation), and it is detected that the user may miss the flight, alternative route segments may involve modifying the travelled route (e.g. to avoid traffic jams indicated by navigation and/or traffic data), changing trains, ordering a taxi, etc. so as to allow the user to arrive in time at the airport for catching the flight.

Alternatively, depending on the situation and available means of transportation, determining one or more alternative travel route segments may comprise determining one or more alternative travel route segments for the next travel route segment, wherein a travel segment start location of a first of the one or more alternative travel route segments preferably corresponds to the travel route start location of the next travel route segment and a travel route segment start time of the first of the one or more alternative travel route segments is preferably later that the estimated arrival time at the travel route segment start location of the next travel route segment.

In such scenario, determining one or more alternative travel route segments may be provided for the next route start segment such that an alternative travel route can be travelled by the user such as to consider and cope with the expected late arrival at the route segment start location of the next travel route segment. For example, if a user is travelling by train, bus, car, taxi, rental car etc. to an airport, where the next travel route segment is associated with a flight (transfer via plane as means of transportation), and it is detected that the user may miss the flight, alternative route segments may involve automatically booking a later flight from the same airport and optionally also cancelation of a reservation/booking for the initially booked flight.

Furthermore, determining one or more alternative travel route segments may comprise determining one or more alternative travel route segments for the specific travel route segment and one or more next travel route segments. Then, a travel segment end location of a last of the one or more alternative travel route segments preferably corresponds to the travel route start location of one of the travel route segments following the one or more next travel route segments and an estimated arrival time at the last of the one or more alternative travel route segments preferably is earlier or equal to the travel route segment start time of said one of the travel route segments following the one or more next travel route segments, or a travel segment end location of a last of the one or more alternative travel route segments preferably corresponds to the travel route destination location and an estimated arrival time at the last of the one or more alternative travel route segments preferably is earlier or equal to the travel route arrival time.

In such a scenario, alternative route segments may be determined so as to rearrange parts of the travel route including plural initially planned travel routes or even the complete remaining travel route up to the final travel route destination. For example, if a user is travelling by train, bus, car, taxi, rental car etc. to an airport, where the next travel route segment is associated with a flight (transfer via plane as means of transportation), and it is detected that the user may miss the flight, alternative route segments may involve automatically booking a later flight from the same airport (potentially even to another airport) and optionally also cancelation of a reservation/booking for the initially booked flight, and in addition, further route segments after arrival at the target airport may be determined (including, e.g. changing a remaining travel route, adding/changing bus/train/taxi/rental car transfers, adding stopovers with associated hotel accommodation etc. and/or changing hotel accommodation at the destination).

As described above, the processing described above may be interrupted, and the travel itinerary information provided in step 250 is, according to embodiments, be adapted to the changed travel circumstances by determining one or more alternative travel route segments. Therein, one or more alternative route travel segments are determined and the journey or parts thereof is rescheduled from the current location onwards accordingly.

The planning and booking step 220 may be executed again, using the updated start point and/or start time, in order to generate updated travel itinerary information having travel route data indicating information on the one or more alternative travel route segments, which can then be used for user recognition and handling of payment as described above.

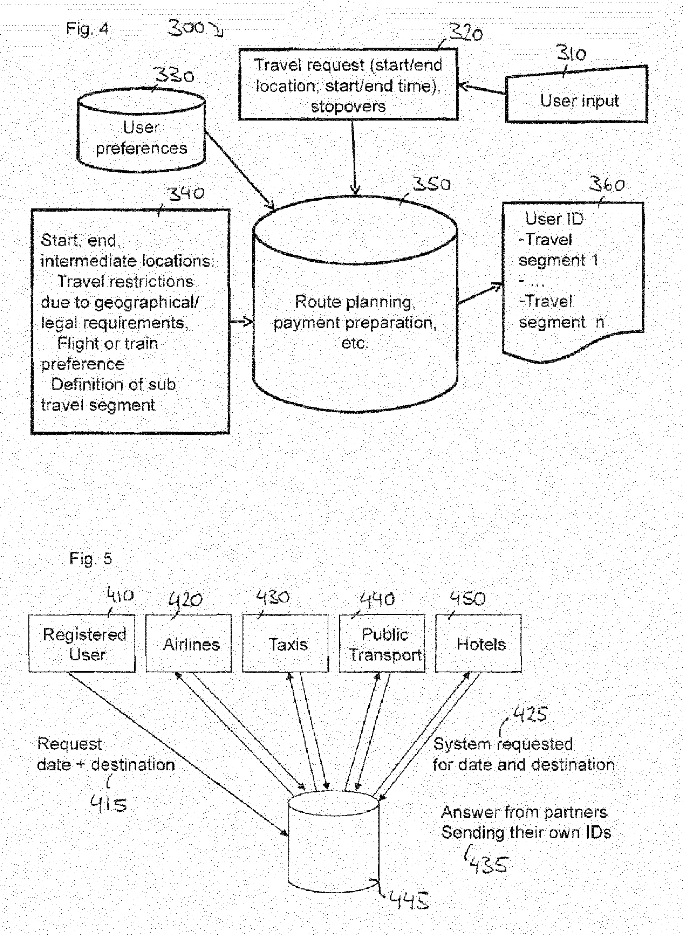

Fig. 4 illustrates the generation of travel itinerary information (travel route data) according to an example process. Following a user input at step 310, a travel request is determined at 320, comprising start and end times of the planned journey and optional stopovers. At 330, user preferences regarding mode of transportation and the like are taken into account, as described above, and at 340 further information regarding the start, end and intermediate locations and further boundary conditions of the journey, such as e.g. geographical and legal limitations to transportation are taken into account. In order to simplify booking and payment aspects, sub travel segments may be defined. This input data is used during the route planning processing step 350 in order to create travel itinerary data (travel route data) 360 which may comprise user ID and contractor ID information for a plurality of travel segments.

According to some embodiments, the travel itinerary data (travel route data) 360 may comprise a single user ID that is associated with all of the travel segments, and specific data (such as e.g. contractor ID data, booking, guidance and navigation data) for each segment.

Fig. 5 illustrates a further aspect of the generation of travel itinerary information (travel route data): after the user 410 has sent his/her travel request at step 415, including date and destination information, the server sends out requests for the travel date and destination at step 425 to various partners, such as e.g. airlines 420, taxis companies 430, public transport providers 440 or hotels 450. At step 435, the partners reply to the various requests, wherein the response may contain information about timetables, booking and payment procedures and the like, together with the respective contractor ID for the partner. Thus, at step 445 the server 10, or an external system or device, can generate travel itinerary information (travel route data) that comprises not only the user ID, but also the respective contractor ID for each segment of the journey.

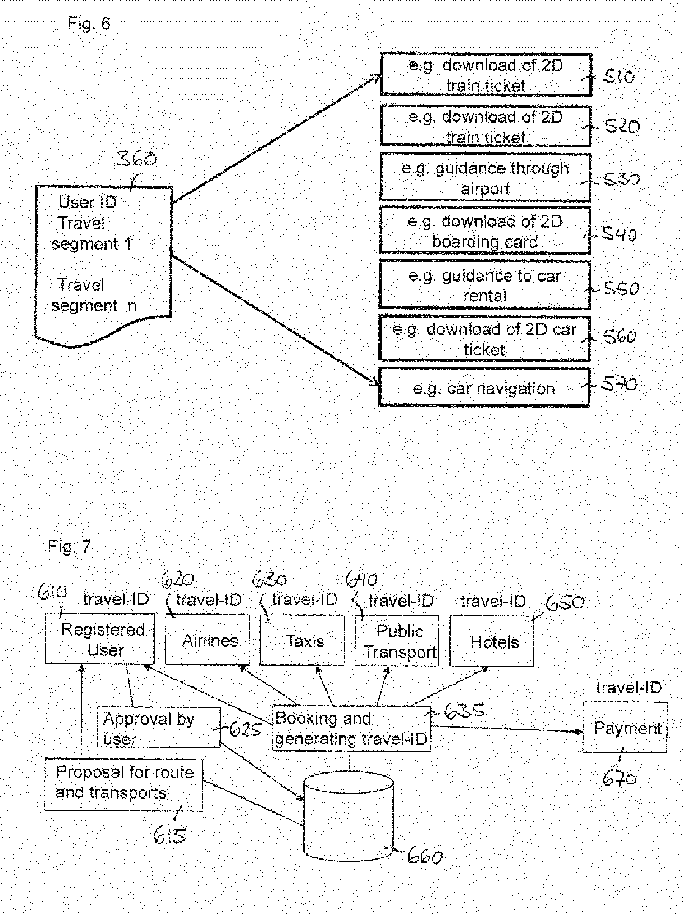

Fig. 6 illustrates an example for the use of travel itinerary information (travel route data) 360 during execution of the travel. Therein, the travel itinerary information (travel route data) 360 may be stored at the server 10, and optionally a copy of the travel itinerary information (travel route data) 360 may be provided at the mobile device 30. For each travel route segment, the server 10 may process the travel itinerary information (travel route data) 360 and may provide the appropriate data or services to the mobile device 30. As shown in Fig. 6, appropriate data may e.g. comprise the provision of tickets for means of transportation such as, e.g. a 2D train ticket, boarding card or car ticket 510, 520, 540, 560, and an appropriate service may comprise guidance through an airport or to a rental car terminal 530, 550 or car navigation services 570.

According to some embodiments, the mobile device 30 may request appropriate data or services for the next travel segment from the server 10 at predetermined times and/or locations during the journey. Alternatively, the server may determine when data or services are to be provided to the mobile device, taking into account e.g. the location and speed of the mobile device, and/or the currently available bandwidth for communication.

Fig. 7 shows an embodiment, wherein a user 610 receives a proposal for a route and transport arrangements from the server 660 (or cloud service) at step 615. If the user approves the proposed travel itinerary at step 625, then the server 660 proceeds to book the transport, accommodation and/or other arrangements for the travel itinerary at step 635. In contrast to the embodiment described above with reference to Fig. 5, in the present embodiment the partners, such as e.g. airlines 620, taxi companies 630, public transport operators 640 or hotels 650 might not send any contractor IDs to the server 660, but instead the server 660 may allocate a travel ID to the user and to each partner 620, 630, 640, 650. This travel ID may enable identification of the user and of the associated booking or travel itinerary, and a single travel ID may be provided for all segments of the journey.

During each travel segment, a client device by any of the partners 620, 630, 640, 650 may check the travel ID supplied by the user's mobile device or by an ID card carried by the user, such that the user can be recognized and can receive transportation or services according to the pre-booked travel itinerary. The travel ID may further be supplied to a payment subsystem 670, such that payment requests may be processed by comparing the travel ID received from any partner 620, 630, 640, 650 with the travel ID received from the server 660, and payment may be authorized if the travel IDs match.

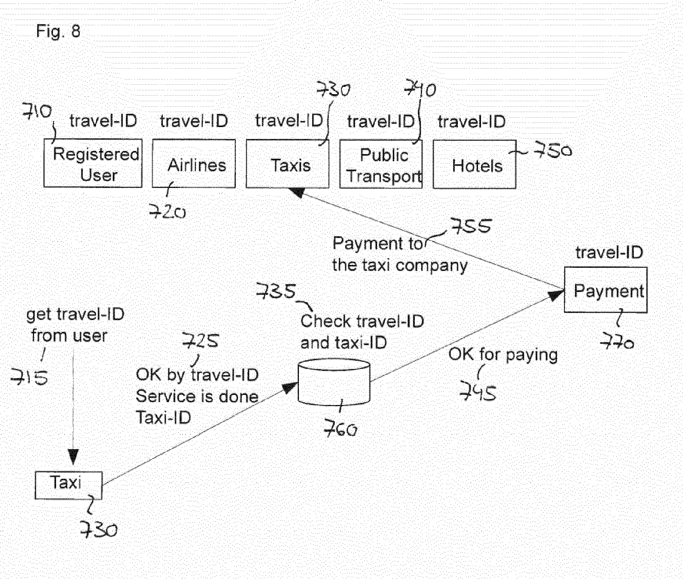

Fig. 8 shows the handling of automatic payments for the embodiment of Fig. 7 in more detail. Therein, the user 710 and the partners 720, 730, 740, 750 (service providers) involved in the organization of the journey have been supplied with a travel ID by the server 760, as described above. Further, the payment subsystem 770 has also been supplied with the travel ID. If, e.g., a taxi 730 receives the travel ID from the user's mobile device at 715, e.g. via a Bluetooth communication channel, the taxi driver can verify whether the travel ID supplied by the user corresponds to the travel ID that the taxi company has received from the server 760 during the booking of the taxi journey. Once the journey is completed, a client device provided in the taxi may send the server 760 a message confirming that this travel segment has been completed. In addition to the travel ID, the completion message may further comprise a taxi ID which enables the server 760 to verify whether the correct taxi has transported the user. As described in conjunction with Fig. 5, in this case the taxi ID may have been sent from the taxi company 730 to the server 760 e.g. during the booking step, so that the server 760 has a stored taxi ID that corresponds to the booked travel itinerary.

Once the server has verified at step 735 that the travel ID and the taxi ID correspond to the respective IDs generated during the booking step, the server 760 sends a payment request to the payment subsystem 770 at step 745. The payment subsystem 770 can then authorize payment to the taxi company 730, using the travel ID which serves to identify the user and the journey to the taxi company 730.

For all of the embodiments described above, location information may be sent from the mobile device 30 to the server 10. Location information may be determined by a GPS subsystem provided at the mobile device 30, or it may be generated by an entity within the communication network, using e.g. information about the network base stations which are closest to the mobile device 30.

If a client device 40 sends a payment request, the server 10 may compare the location information of the mobile device 30 with location information for the client device 40, which may be either stored in a database at the server 10, or which may be received from the client device 40. As a safety measure for preventing fraud, payment may be authorized only if the location information of the mobile device 30 matches the location information of the client device 40 which is requesting payment. Thus, it can be ensured that client devices 40, which may have got infected with malicious software, cannot randomly generate payment requests using user IDs from previous or future bookings.

At the client device 40, the user's mobile device 30 may be verified by a reference number, a 1D or a 2D barcode, a mobile device ID or the like. Alternatively, an electronic ID card may be used which may e.g. be read at a card reader that is connected to the client device 40.

With the location information received from the mobile device 30, any variation or changes of the travel sequence or transportation arrangements can be automatically detected and may result in redirection or rearrangements.

In summary, the above-described system and method provide a complete travel assistance service to a user, wherein assistance is provided throughout the journey along the travel route, while keeping the processing and storage requirements of the user's mobile device to a minimum. Any changes of the travel itinerary can be performed on-line, e.g. it is automatically recognized if a user misses a flight and the journey can be reorganized from this point onwards. After each travel segment, payment may be handled for the services used thus far. Payment is authorized if a user ID (or a travel ID comprising user ID information) provided by the mobile device 30 and an identification of the booked service provided e.g. by the client device 40 match the travel itinerary information stored at the server 10.

The above-described concept is independent of automatic payment and the employed payment method. Today, a large variety of different payment solutions are available, such as e.g. payment services based on 2D barcodes, mobile payment services utilizing wireless close range communication systems, internet-based payment systems, such as e.g. PayPal, credit card payment or various micro payment schemes. Each of these payment systems, however, relies on secure identification of both parties, which is provided by the above-described method and system.

The embodiments described below give various examples for methods, devices and systems for travel assistance for a user.

While a plurality of embodiments are described above, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

The above-described method, system and devices provide the advantage of handling travel assistance for a user by means of a mobile device connected to a server/cloud system, wherein the processing and data storage requirements at the mobile device are kept to a minimum, while a user is presented with a complete travel management and assistance system.

In the above description, a server is referred to during the description of various embodiments of the method. It is to be understood that this may relate to a physical server located within a communication network, or to a cloud service which may not coincide with a single physical device, but which may rely on processing being performed on several different devices within the communication network.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for performing travel assistance for a user, comprising:
- providing travel route data (360) indicative of a travel route of the user;
- receiving, while the user travels along the travel route on a current travel route segment, information indicative of a position of the user;
- estimating, while the user travels along the travel route on the current travel route segment, an estimated arrival time at a travel route segment start location of a next travel route segment of the travel route, on the basis of the received signal and the provided travel route data, or determining, while the user travels along the travel route on the current travel route segment, an actual arrival time at the travel route segment start location of the next travel route segment of the travel route, on the basis of the received information and the provided travel route data;
- determining one or more alternative travel route segments, if the estimated or determined arrival time at the travel route segment start location of the next travel route segment is later than a travel route segment start time of the next travel route segment; and
- providing updated travel route data indicative of the determined one or more alternative travel route segments.

2. Method according to claim 1, wherein
information indicative of a position of the user is received from a mobile device which is configured to determine a current position of the mobile device and to transmit position information indicative of the position of the mobile device, and
the arrival time at the travel route segment start location of the next travel route segment is estimated or determined on the basis of a current time and the position of the mobile device indicated by the position information.

3. Method according to claim 2, wherein
the mobile device is a mobile communication device (30) of the user, or
the mobile device is a device installed on a means of transportation associated with the current travel route segment.

4. Method according to at least one of the preceding claims, wherein
information indicative of a position of the user is received from a stationary device being configured to determine a position of the user and to transmit position information indicative of the position of the user, and
the arrival time at the travel route segment start location of the next travel route segment is estimated or determined on the basis of a current time and the position of the user indicated by the position information.

5. Method according to at least one of the preceding claims, wherein
information indicative of a position of the user is received from a mobile interaction detecting device being configured to detect an interaction of the user and to transmit position information indicative of a location of the interaction detecting device, and
the arrival time at the travel route segment start location of the next travel route segment is estimated or determined on the basis of a current time and the position of the interaction detecting device indicated by the position information.

6. Method according to at least one of the preceding claims, wherein
information indicative of a position of the user is received from a stationary interaction detecting device being located at the travel route segment end location of the current travel route segment or at the travel route segment start location of the next travel route segment, the stationary interaction detecting device being configured to detect an interaction of the user and to transmit interaction information indicative of a time of detected interaction of the user, and
the arrival time at the travel route segment start location of the next travel route segment is determined on the basis of the time of detected interaction of the user indicated by the interaction information and the position of the interaction detecting device.

7. Method according to claim 5 or 6, wherein
the interaction detected by the interaction detecting device is at least one of a checkout interaction of the user in which the user checks out from a means of transportation or travel service associated with the current travel route segment, a check-in interaction of the user in which the user checks in for a means of transportation or a travel service associated with the next travel route segment, an automatic payment interaction of the user in which the user performs automatic payment for a means of transportation or a travel service associated with the current travel route segment or with the next travel route segment, an identification interaction of the user in which the user is identified at the interaction detecting device, a login interaction of the user in which the user logs in at a stationary computer terminal or into a stationary local wireless network, and an ATM interaction in which the user uses a stationary ATM device.

8. Method according to at least one of the preceding claims, further comprising
- automatically requesting a reservation for means of transportation or travel service associated with one or more of the determined alternative travel route segments.

9. Method according to at least one of the preceding claims,
wherein the travel route segments include one or more actively travelled travel route segments being associated with an actively travelled means of transportation, in particular with one of travelling on foot, travelling by bike, travelling by car, travelling by rental car as the means of transportation, and
wherein the method further comprises:
- providing navigation data to a mobile device of the user in case the user is travelling on an actively travelled travel route segment.

10. Method according to at least one of the preceding claims,
wherein the travel route data includes data being indicative of a travel route start location, a travel route start time at the travel route start location, a travel route destination location, and/or a travel route arrival time at the travel route destination location.

11. Method according to at least one of the preceding claims,
wherein the travel route data includes data being indicative of a sequence of a plurality of subsequent travel route segments of the travel route, each of the travel route segments in the data being associated with one means of transportation to be used for travelling on the respective travel route segment or one travel service and each travel route segment being defined by a respective travel route segment start location, a respective travel route segment start time, a respective travel route segment end location, and/or a respective travel route segment end time.

12. System for performing travel assistance for a user, comprising:
- data providing means (10a) for providing travel route data indicative of a travel route of the user;
- information receiving means (10b) for receiving, while the user travels along the travel route on a current travel route segment, information indicative of a position of the user;
- arrival time estimating/determining means (10c) for estimating, while the user travels along the travel route on the current travel route segment, an estimated arrival time at a travel route segment start location of a next travel route segment of the travel route, on the basis of the received signal and the provided travel route data, and/or determining, while the user travels along the travel route on the current travel route segment, an actual arrival time at the travel route segment start location of the next travel route segment of the travel route, on the basis of the received information and the provided travel route data; and
- alternative travel route segment determining means (10d) for determining one or more alternative travel route segments, if the estimated or determined arrival time at the travel route segment start location of the next travel route segment is later than a travel route segment start time of the next travel route segment,
wherein the data providing means (10a) is configured to provide updated travel route data indicative of the one or more alternative travel route segments determined by the alternative travel route segment determining means (10d).

13. System according to claim 12, further comprising:
- a mobile device (30) configured to determine a current position of the mobile device and to transmit position information indicative of the position of the mobile device to the information receiving means,
- a stationary device being configured to determine a position of the user and to transmit position information indicative of the position of the user to the information receiving means,
- a mobile interaction detecting device being configured to detect an interaction of the user and to transmit position information indicative of a location of the interaction detecting device to the information receiving means, and/or
- a stationary interaction detecting device being located at the travel route segment end location of the current travel route segment or at the travel route segment start location of the next travel route segment, the stationary interaction detecting device being configured to detect an interaction of the user and to transmit interaction information indicative of a time of detected interaction of the user to the information receiving means.

14. System according to claim 12 or 13, further comprising
- requesting means (10e) for automatically requesting a reservation for means of transportation or travel service associated with one or more of the determined alternative travel route segments.

15. System according to at least one of claims 12 to 14, wherein
the travel route segments include one or more actively travelled travel route segments being associated with an actively travelled means of transportation, in particular with one of travelling on foot, travelling by bike, travelling by car, travelling by rental car as the means of transportation, and
the data providing means (10a) is configured to provide navigation data to a mobile device of the user in case the user is travelling on an actively travelled travel route segment.
